# EUROPÄISCHE PATENTSCHRIFT

(11) **EP 1 581 085 B1**
(45) Veröffentlichungstag und Bekanntmachung des Hinweises auf die Patenterteilung: **28.06.2006**
(21) Anmeldenummer: 03789327.8
(22) Anmeldetag: 18.12.2003
(51) Int. Cl.: A47J 43/08, H02K 9/06

(54) **KÜCHENGERÄT**
KITCHEN APPLIANCE
USTENSILE DE CUISINE

(30) Priorität: 30.12.2002 DE 10261371
(43) Veröffentlichungstag der Anmeldung: 05.10.2005
(73) Patentinhaber: BSH Bosch und Siemens Hausgeräte GmbH, 81739 München (DE)
(72) Erfinder: PAVLOVIC, Henrik, Ljubno ob Savin 3333 (SI); SEDOVSEK, Aleksander, 3330 Mozirje (SI); SEMEJA, Uros, 3327 Smartno ob Paki (SI); ZIBRET, Igor, 3327 Smartno ob Paki (SI)
(86) Internationale Anmeldenummer: PCT/EP2003/014472
(87) Internationale Veröffentlichungsnummer: WO 2004/058023

(56) Entgegenhaltungen:
- GB-A- 714 021
- US-A- 3 738 616
- US-A- 5 273 358
- US-A- 6 069 423
- US-B1- 6 309 180

## Beschreibung

Die Erfindung betrifft ein Küchengerät, insbesondere eine Mischzerkleinerungsvorrichtung mit den im Oberbegriff des Patentanspruchs 1 genannten Merkmalen.

Motorbetriebene elektrische Geräte benötigen oftmals eine Kühleinrichtung. Für kleinere Geräte kommt vorwiegend eine Luftkühlung mittels einer Kühlluftströmung in Frage, die durch einen vom Antriebsmotor betriebenen Lüfterflügel erzeugt werden kann. Für eine effektive Kühlluftführung ist ein Lufteinlass und ein Luftauslass notwendig, die typischerweise jeweils an entgegen gesetzten Seiten eines Gehäuses angeordnet sind. Ein Beispiel für ein derartiges motorbetriebenes elektrische Geräte ist eine Mischzerkleinerungsvorrichtung für den Haushalt. Diese sog. Blender oder Mixer weisen ein Motorgehäuse mit einem elektrischen Antriebsmotor und einen meist auf einer Oberseite des Gehäuses aufsetzbaren Becher auf, in dessen unterem Bereich eine Messer- oder Werkzeugwelle um eine vertikale Achse rotieren kann. Der unten offene Becher kann normalerweise mitsamt einem Bodenbereich vom Gehäuse abgenommen werden, um den darin zuvor zerkleinerten und/oder fein durchmischten Inhalt in ein Gefäß entleeren zu können. Der Bodenbereich des Bechers ist typischerweise als sog. Schüsselträger ausgestaltet, der den damit verbundenen Becher nach außen und zum Motor hin abdichtet und der gleichzeitig eine Halterung für die von einer Abtriebswelle des Antriebsmotor trennbare Messerwelle bildet.

Es sind Kühleinrichtungen bekannt, um die im Antriebsmotor einer Mischzerkleinerungsvorrichtung bei länger dauerndem Betrieb entstehende Verlustwärme abzuführen. So zeigt die US-A-5 273 358 eine Mischzerkleinerungsvorrichtung mit einem Lüfterflügel an einem unteren Wellenstumpf einer vertikal rotierenden Motorwelle. Ein Luftaüslasskanal befindet sich in einem, am Gehäuseboden angeordneten aufgesetzten unteren Gehäusedeckel. Der rotierende Lüfterflügel sorgt für eine Kühlung des Antriebsmotors während des Betriebs. Dokument US-6069423 offenbart ein Küchengerät mit den im Oberbegriff des Patentanspruchs 1 genannten Merkmalen.

Eine Aufgabe der vorliegenden Erfindung besteht darin, bei einem motorbetriebenen Küchengerät mit integrierter Luftkühlung, insbesondere bei einer gattungsgemäßen Mischzerkleinerungsvorrichtung die Luftführung im Gehäuse und insbesondere die Gehäusekomponenten zur Luftführung zu vereinfachen.

Diese Aufgabe wird bei einem Küchengerät mit den im Patentanspruch 1 genannten Merkmalen dadurch gelöst, dass ein Luftführungskanal einstückig mit einem Gehäuse des Geräts ausgebildet ist. Hierdurch sind keine zusätzlichen Gehäuseteile notwendig, die den Herstellungs- und Montageaufwand vergrößern würden. Die Luftführung ist so in das Gehäuse integriert, dass der Montageaufwand gegenüber einer ungekühlten Variante im Wesentlichen unverändert bleibt.

Vorzugsweise ist der Luftführungskanal in einem Gehäuseboden angeordnet, wo er sich problemlos unterbringen lässt, ohne dass dadurch bspw. die Ausströmung nach unten beeinträchtigt wird. Insbesondere kann der Luftführungskanal als schlitzartige Öffnung ausgebildet sein, die ausreichend schmal bemessen ist, um einen gewissen Schutz gegen das Eindringen von Fremdkörpern in das Gehäuseinnere bieten zu können. Alternativ hierzu kann der Luftführungskanal auch in einem seitlichen, unteren Bereich des Gehäuses angeordnet sein, wo er sich ebenso problemlos unterbringen lässt, ohne dass dadurch bspw. die Ausströmung nach unten beeinträchtigt wird. Vorzugsweise ist die Gehäuseöffnung des Luftführungskanals bei dieser Variante durch ein Gitter o. dgl. abgedeckt.

Im Gehäuse kann oberhalb des Luftführungskanals eine zusätzliche Barrierewand angeordnet sein, die für eine Abschottung einer unteren Kammer gegen das Gehäuseinnere sorgen kann. Hierdurch wird ein Kurzschluss der Strömung am Antriebsmotor vorbei verhindert und sichergestellt, dass die gesamte vom Lüfterflügel geförderte Kühlluft den Antriebsmotor durchstreicht.

Vorzugsweise verläuft die Kühlluftströmung von oben nach unten durch das Gehäuse und durch den Antriebsmotor, so dass zunächst wärmebeanspruchte Teile wie eine Kupplung und ein oberes Lager gekühlt werden können, bevor die Strömung durch den sich im Betrieb stärker erwärmenden Antriebsmotor verläuft. Ein Lufteinlass ist vorzugsweise an einer Oberseite des Gehäuses vorgesehen, so dass die noch kühle Luft zunächst die zu kühlenden Teile oberhalb des Motors und erst anschließend den Antriebsmotor durchströmt.

Eine Ausgestaltung der Erfindung sieht vor, dass ein die Kühlluftströmung erzeugende Lüfterflügel in Nähe des Luftführungskanals angeordnet ist. Vorzugsweise sitzt der Lüfterflügel auf einem unteren Wellenstumpf der Motorwelle. Der Lüfterflügel kann hierbei eine axial durch den Motor verlaufende Strömung in eine radial austretende Luftströmung umlenken, die anschließend in horizontaler Richtung aus dem Luftauslasskanal tritt.

Gemäß einer weiteren Ausführungsform der Erfindung weist der Luftführungskanal einen abschnittsweise rechteckförmigen Querschnitt auf und ist seitlich durch eine Schottwand des Gehäuses begrenzt. Diese Schottwand kann bspw. eine Kabelführung o. dgl. aufweisen.

Weiterhin ist vorzugsweise eine Abdeckung als Luftleiteinrichtung vorgesehen, die den Lüfterflügel radial und/oder axial zumindest teilweise umschließt und einseitig radial an den Luftführungskanal grenzt. Hierdurch wird eine gezielte Luftführung im Gehäuse erreicht und sichergestellt, dass die gesamte vom Lüfterflügel beförderte Kühlluft das Gehäuse durch die Öffnung verlässt. Die Abdeckung kann wahlweise eine untere Abstützung der Motorwelle im Gehäuse bilden. Hierzu kann es vorteilhaft sein, well die Abdeckung über einen zusätzlichen Dämpfungsring schwingungsgedämpft im Gehäuse gelagert ist.

Bei auf dem Gehäuseboden montiertem Gehäuse ist der Luftführungskanal vorzugsweise von einer vertikalen Gehäusewand, insbesondere von einer Rückwand seitlich verschlossen. Die Gehäuserückwand bildet somit einen Verschluss für die nach der Herstellung des Gehäusebodens noch offene Seite des Luftführungskanals. Nach montiertem Gehäuse verbleibt lediglich die schlitzartige Öffnung im Boden bzw. die alternative Öffnung in der Gehäuserückwand.

Vorzugsweise wird zumindest das Gehäuse und/oder der Gehäuseboden des Küchengeräts mittels eines Spritzgießverfahrens hergestellt. Auf diese Weise lässt sich der Luftführungskanal mittels eines verschiebbaren Kerns einer Spritzgussform herstellen, so dass die gesamte Fertigung des Küchengeräts sehr einfach und kostengünstig ablaufen kann.

Weitere Aspekte und vorteilhafte Weiterbildungen der Erfindung ergeben sich aus den abhängigen Ansprüchen sowie aus der nachfolgenden Figurenbeschreibung.

Nachstehend wird die Erfindung anhand eines Ausführungsbeispiel unter Bezugnahme auf die beiliegenden Zeichnungen näher erläutert. Dabei zeigt:
- Figur 1: eine schematische Schnittdarstellung einer Mischzerkleinerungsvorrichtung,
- Figur 2: ein Teilschnitt durch ein Gehäuse der Mischzerkleinerungsvorrichtung zur Verdeutlichung einer Kühlluftströmung und
- Figur 3: ein Teilschnitt eines unteren Bereichs des Gehäuses mit einem integrierten Luftführungskanal.

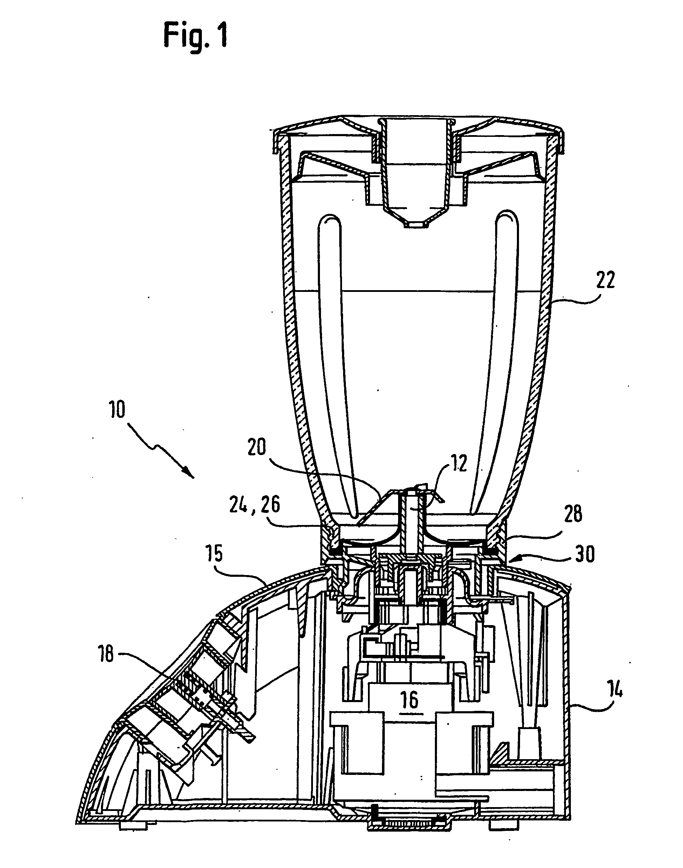

Ein erfindungsgemäßes Küchengerät wird im Folgenden beispielhaft anhand einer Mischzerkleinerungsvorrichtung 10 erläutert. Die Mischzerkleinerungsvorrichtung 10 weist eine rotierende Werkzeugwelle 12 auf und umfasst ein Gehäuse 14 mit einer darin angeordneten Antriebsvorrichtung, vorzugsweise einem elektrischen Antriebsmotor 16 (vgl. Figur 1). An einer Frontseite des Gehäuses 14 ist ein Bedienelement 18 zur Bedienung der Funktionen der Mischzerkleinerungsvorrichtung 10 vorgesehen.

Die Werkzeugwelle 12 mit daran angeordneten Messern 20 weist eine vertikale Drehachse auf und ragt in einen Becher 22, der auf eine Oberseite des Gehäuses 14 aufgesetzt ist und bei Bedarf hiervon abgenommen werden kann. Der Becher 22 weist eine offene Unterseite 24 mit einem ringförmigen Bund 26 auf, der eine zylindrische Außenmantelfläche mit einem darauf befindlichen Außengewinde oder einer Bajonettpassung o. dgl. aufweist. Diese korrespondiert mit einem entsprechenden Innengewinde bzw. einer Gegenpassung einer Bajonettverriegelung eines Becherträgers 28. Der Becherträger 28 kann gemeinsam mit dem Becher 22 vom Gehäuse 14 abgenommen werden und dichtet in diesem Fall die offene Unterseite 24 des Bechers 22 ab. Bei fest mit dem Becherträger 28 verbundenem Becher 22 bleibt die Werkzeugwelle 12 auch bei abgenommenem Becher 22 mit diesem verbunden, da diese in einem Lagerschild gelagert ist, der zwischen Becher 22 und Becherträger 28 fixiert ist.

Der Becherträger 28 befindet sich im aufgesetzten Zustand in einer entsprechenden Aufnahme 30 an einer Oberseite 15 des Gehäuses 14 und ist dort normalerweise verriegelt, so dass er nicht unbeabsichtigt gelöst werden kann.

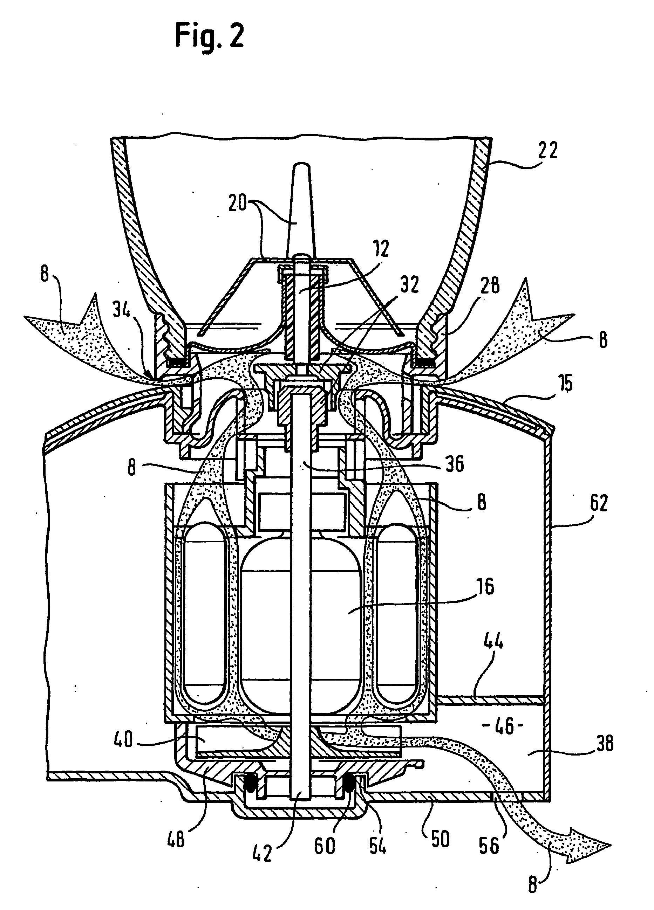

Figur 2 verdeutlicht eine Kühlluftströmung 8 durch das Gehäuse 14 und den Antriebsmotor 16. Ein Lufteinlass 34 zwischen Gehäuseoberseite 15 und Becherträger 28 ermöglicht den Eintritt von kühlender Luft, die anschließend einen oberen Bereich des Gehäuses 14 durchstreicht und hierbei u.a. eine Kupplung 32 zwischen Abtriebswelle 36 des Antriebsmotors 16 und Werkzeugwelle 12 kühlt. Die Kupplung 32 dient zur axialen Trennung der Kraftübertragung bei abgenommenem Becher 22 und/oder Becherträger 28 von der Aufnahme 30 der Gehäuseoberseite 15.

Die Kühlluftströmung verläuft in vertikaler Richtung von oben nach unten durch das Gehäuse 14, durchstreicht den Antriebsmotor 16 und tritt anschließend in einen Luftführungskanal 38 ein, der in einem unteren Bereich des Gehäuses 14 angeordnet ist. Die Luft verlässt das Gehäuse 14 durch eine Öffnung 56 im Gehäuseboden 50. Die vertikal durch das Gehäuse 14 verlaufende Kühlluftströmung 8 wird durch einen rotierenden Lüfterflügel 40 erzeugt, der an einem unteren Wellenstumpf 42 der Abtriebswelle 36 angeordnet ist und sich mit gleicher Drehzahl wie diese dreht. Der Lüfterflügel 40 saugt in axialer Richtung an und gibt die Luft in radialer Richtung nach außen ab.

Eine horizontal angeordnete Barrierewand 44 trennt einen oberen Bereich des Gehäuseinneren von einer unteren Kammer 46, in der sich der Luftführungskanal 38 befindet. Die Barrierewand 44 hindert die Kühlluftströmung 8 daran, außen am Antriebsmotor 16 vorbei zu streichen, ohne diesen ausreichend zu kühlen. Die dem Luftführungskanal 38 gegenüber liegende Seite des Lüfterflügels 40 ist mit einer Abdeckung 48 verschalt, die nur eine bevorzugte Ausströmrichtung in radialer Richtung zulässt, nämlich in Richtung des Luftführungskanals 38. Die Abdeckung 48 umschließt den Lüfterflügel 40 teilweise in radialer und axialer Richtung, so dass dieser die Luft ausschließlich in den bündig an die Abdeckung 48 angrenzenden Luftführungskanal 38 drückt, wie dies durch den gerichteten Pfeil der Kühlluftströmung 8 angedeutet ist.

Die Abdeckung 48 dient im gezeigten Ausführungsbeispiel gleichzeitig als Aufnahme für eine äußere Lagerschale eines unteren Wellenlagers, das wahlweise als ein Gleit- oder Wälzlager ausgebildet sein kann. Ein oberes Wellenlager ist unmittelbar unterhalb der Kupplung 32 angeordnet. Die Abdeckung 48 stützt sich gegen den Gehäuseboden 50 über eine daraus ragende ringförmige Auflage 54 ab, wobei zwischen Abdeckung 48 und Auflage 54 ein zusätzlicher Dämpfungsring 60 vorgesehen ist, der zur Schwingungs-, Vibrations- und/oder Geräuschdämpfung dient, da er verhindert, dass Rundlaufabweichungen der Motorwelle ungedämpft in das Gehäuse 14 eingeleitet werden, wo sie bspw. zu Körperschalleffekten führen können.

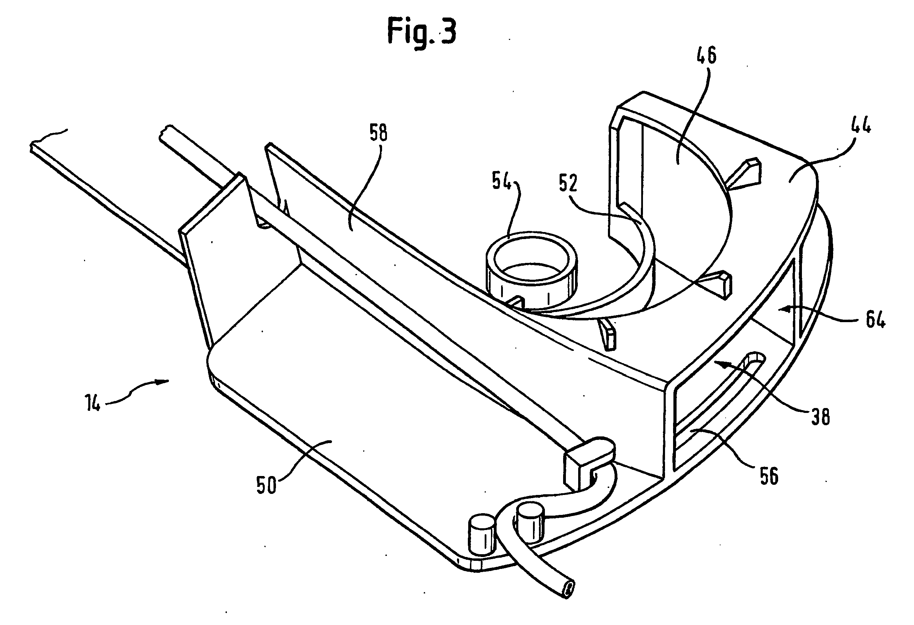

Figur 3 verdeutlicht in einem Teilschnitt einen unteren Bereich des Gehäuses 14 mit dem darin angeordneten Luftführungskanal 38. Dieser reicht nach unten bis zum Gehäuseboden 50 und wird nach oben durch die Barrierewand 44 begrenzt. Im gezeigten Ausführungsbeispiel weist der Luftauslasskanal 38 eine rechteckige Form mit ungefähr einer gleichen Breite wie der Außendurchmesser des Lüfterflügels 40 auf. Innerhalb der unteren Kammer 46 ist die ringförmige Auflage 54 für die Abdeckung 48 (nicht dargestellt) erkennbar, in welcher das untere Wellenlager angeordnet ist und in die der untere Wellenstumpf 42 der Abtriebswelle 36 reicht. Ein halbkreisförmiger Ringsteg 52 dichtet die untere Kammer 46 bei eingelegter Abdeckung 48 gegen den oberen Teil des Gehäuses 14 ab.

Seitlich wird der Luftführungskanal 38 durch eine Schottwand 58 begrenzt, die annähernd parallel zu einer seitlichen äußeren Gehäusewand (nicht dargestellt) verläuft und die im Bereich des Luftführungskanals 38 rechtwinkelig an die Barrierewand 44 grenzt. Die Schottwand 58 kann bspw. eine Kabelführung o. dgl. gegen den Antriebs- und Luftführungsbereich des Gehäuses 14 abtrennen.

Eine Rückwand 62 des Gehäuses (vgl. Figur 2) verschließt bei auf dem Gehäuseboden 50 montiertem Gehäuse 14 eine Kanalöffnung 64 und lässt lediglich die schlitzartige Öffnung 56 frei, durch welche die Kühlluft nach unten aus dem Gehäuse 14 gedrückt wird.

Die gezeigte erfindungsgemäße Ausgestaltung der Kühlluftführung und insbesondere der einstückigen Ausbildung des Luftführungskanals im Gehäuse weist fertigungstechnische Vorteile auf, da für die Aufnahme des Lüfterflügels und für die Luftführung nach außen keine weiteren Gehäuseteile notwendig sind. Die integrierte Ausbildung der Gehäuseöffnung ermöglicht eine Kostenreduzierung bei der Herstellung des elektrischen Geräts.

Die gezeigte Ausgestaltung des Luftführungskanals 38 lässt sich insbesondere mittels eines Spritzgießverfahrens realisieren, bei dem ein verschiebbarer Kern den Kontur des Kanals 38 vorgibt. Nach dem Spritzgussvorgang wird dieser Kern aus der Kanalöffnung 64 gezogen, so dass der fertige Gehäuseboden 50 ausgeformt werden kann. Die Kanalöffnung 64 wird dann bei montiertem Gehäuse 14 durch dessen Rückwand 62 verschlossen.

## Patentansprüche

1. Küchengerät, insbesondere Mischzerkleinerungsvorrichtung, mit einem Gehäuse (14) und einem darin angeordneten Antnebsmotor (16) zum Antrieb einer Werkzeugwelle (12), mit einem mit dem Antriebsmotor (16) gekoppelten Lüfterflügel (40) zur Erzeugung einer Kühlluftströmung (8) durch das Gehäuse (14), und mit einem Luftführungskanal (38), der mit dem Gehäuse (14) einstückig ausgebildet und in dessen Gehäuseboden (50) angeordnet ist, **dadurch gekennzeichnet, dass** ein Lufteinlaß (34) an einer Oberseite (15) des Gehäuses (14) angeordnet ist.

2. Küchengerät nach Anspruch 1, **dadurch gekennzeichnet, dass** der Lufteinlaß (34) zur Kühlung wärmebeanspruchter Teile oberhalb des Antriebsmotors (16) einen, zwischen der Oberseite (15) und einem Becherträger (28) angeordneten Eintritt für die Kühlluftströmung (8) aufweist.

3. Küchengerät nach Anspruch 2, **dadurch gekennzeichnet, dass** das wärmebeanspruchte Teil eine Kupplung (32) zwischen einer Abtriebswelle (36) des Antriebsmotors (16) und der Werkzeugwelle (12) ist.

4. Küchengerät nach Anspruch 2, **dadurch gekennzeichnet, dass** das wärmebeanspruchte Teil ein oberes Lager der Antriebswelle (36) ist.

5. Küchengerät nach einem der Ansprüche 1 bis 4, **dadurch gekennzeichnet, dass** im Gehäuse (14) oberhalb des Luftführungskanals (38) eine Barrierewand (44) angeordnet ist.

6. Küchengerät nach Anspruch 5, **dadurch gekennzeichnet, dass** die Barrierewand (44) zur Trennung eines oberen Bereiches des Gehäuseinneren von einer unteren Kammer (46) horizontal verlaufend angeordnet ist.

7. Küchengerät nach einem der Ansprüche 1 bis 6, **dadurch gekennzeichnet, dass** der Luftführungskanal (38) einen abschnittsweise rechteckförmigen Querschnitt aufweist und seitlich durch eine Schottwand (58) des Gehäuses (14) begrenzt ist.

8. Küchengerät nach Anspruch 7, **dadurch gekennzeichnet, dass** der Luftführungskanal (38) bei auf dem Gehäuseboden (50) montiertem Gehäuse (14) von einer vertikalen Gehäusewand, insbesondere von einer Rückwand (62) seitlich verschlossen ist.

9. Küchengerät nach einem der Ansprüche 1 bis 8, **dadurch gekennzeichnet, dass** eine Abdeckung (48) den Lüfterflügel (40) radial und/oder axial zumindest teilweise umschließt und einseitig radial an den Luftführungskanal (38) grenzt.

10. Küchengerät nach Anspruch 9, **dadurch gekennzeichnet, dass** die Abdeckung (48) eine untere Abstützung der Abtriebswelle (36) des Antriebsmotors (16) im Gehäuse (14) bildet.

11. Küchengerät nach Anspruch 9 oder 10, **dadurch gekennzeichnet, dass** die Abdeckung (48) über einen Dämpfungsring (60) im Gehäuse (14) gelagert ist.

## Claims

1. Kitchen appliance, particularly mixing/chopping device, with a housing (14) and a drive motor (16) arranged therein for drive of a tool shaft (12), with a fan blade (40), which is coupled with the drive motor (16) for producing a cooling air flow (8) through the housing (14), and with an air guide channel (38) which is constructed integrally with the housing (14) and arranged in the housing base (50) thereof, **characterised in that** an air inlet (34) is arranged at an upper side (15) of the housing (14).

2. Kitchen appliance according to claim 1, **characterised in that** the air inlet (34) has, for cooling parts above the drive motor (16) subjected to heat, an inlet, which is arranged between the upper side (15) and a beaker carrier (28), for the cooling air flow (8).

3. Kitchen appliance according to claim 2, **characterised in that** the part subjected to heat is a coupling (32) between a driven shaft (36) of the drive motor (16) and the tool shaft (12).

4. Kitchen appliance according to claim 2, **characterised in that** the part subjected to heat is an upper bearing of the drive shaft (36).

5. Kitchen appliance according to one of claims 1 to 4, **characterised in that** a barrier wall (44) is arranged in the housing (14) above the air guide channel (38).

6. Kitchen appliance according to claim 5, **characterised in that** the barrier wall (44) is arranged to be horizontally extending for separation of an upper region of the housing interior from a lower chamber (46).

7. Kitchen appliance according to one of claims 1 to 6, **characterised in that** the air guide channel (38) has in sections a rectangular cross-section and is bounded laterally by a bulkhead (58) of the housing (14).

8. Kitchen appliance according to claim 7, **characterised in that** the air guide channel (38) when the housing (14) is mounted on the housing base (50) is laterally closed by a vertical housing wall, particularly a rear wall (62).

9. Kitchen appliance according to one of claims 1 to 8, **characterised in that** a cover (48) radially and/or axially encloses the fan blade (40) at least in part and at one side radially bounds the air guide channel (38).

10. Kitchen appliance according to claim 9, **characterised in that** the cover (48) forms a lower support of the driven shaft (36) of the drive motor (16) in the housing (14).

11. Kitchen appliance according to claim 9 or 10, **characterised in that** the cover (48) is mounted in the housing (14) by way of a damping ring (60).

## Revendications

1. Ustensile de cuisine, en particulier dispositif hachoir-mélangeur, avec un boîtier (14) et, agencé dans celui-ci, un moteur de commande (16) pour commander un arbre d'outil (12), avec, couplée au moteur de commande (16), une ailette de ventilateur (40) pour créer un courant d'air de refroidissement (8) à travers le boîtier (14), et avec un canal de conduction d'air (38) lequel est conçu en une pièce avec le boîtier (14) et est agencé sur le fond de boîtier (50) de celui-ci, **caractérisé en ce qu'**une entrée d'air (34) est placée sur un côté supérieur (15) du boîtier (14).

2. Ustensile de cuisine selon la revendication 1, **caractérisé en ce que** l'entrée d'air (34), dans le but de refroidir les pièces sollicitées par la chaleur au-dessus du moteur de commande (16), présente une entrée pour le courant d'air de refroidissement (8), disposée entre le côté supérieur (15) et un support de bol (28).

3. Ustensile de cuisine selon la revendication 2, **caractérisé en ce que** la pièce sollicitée par la chaleur est un accouplement (32) entre un arbre de sortie (36) du moteur de commande (16) et l'arbre d'outil (12).

4. Ustensile de cuisine selon la revendication 2, **caractérisé en ce que** la pièce sollicitée par la chaleur est un palier supérieur de l'arbre de commande (36).

5. Ustensile de cuisine selon l'une des revendications 1 à 4, **caractérisé en ce qu'**une paroi barrière (44) est disposée dans le boîtier (14) au-dessus du canal de conduction d'air (38).

6. Ustensile de cuisine selon la revendication 5, **caractérisé en ce que** la paroi barrière (44), dans le but de séparer une partie supérieure de l'intérieur du boîtier d'une chambre inférieure (46), est disposée de manière à s'étendre horizontalement.

7. Ustensile de cuisine selon l'une des revendications 1 à 6, **caractérisé en ce que** le canal de conduction d'air (38) présente une section de forme partiellement rectangulaire et est limité latéralement par une paroi de cloisonnement (58) du boîtier (14).

8. Ustensile de cuisine selon la revendication 7, **caractérisé en ce que** lorsque le boîtier (14) est monté sur le fond de boîtier (50), le canal de conduction d'air (38) est obturé latéralement par une paroi de boîtier verticale, en particulier par une paroi arrière (62).

9. Ustensile de cuisine selon l'une des revendications 1 à 8, **caractérisé en ce qu'**un revêtement (48) enferme l'ailette de ventilateur (40), au moins en partie, radialement et/ou axialement et aboutit d'un côté radialement sur le canal de conduction d'air (38).

10. Ustensile de cuisine selon la revendication 9, **caractérisé en ce que** le revêtement (48) forme un support inférieur de l'arbre de sortie (36) du moteur de commande (16) dans le boîtier (14).

11. Ustensile de cuisine selon la revendication 9 ou 10, **caractérisé en ce que** le revêtement (48) est monté au moyen d'un anneau amortisseur (60) dans le boîtier (14).
